(19) Europäisches Patentamt
European Patent Office
Office européen des brevets

(11) Publication number: **0 322 916 B1**

(12) **EUROPEAN PATENT SPECIFICATION**

(45) Date of publication of patent specification: **05.05.93**

(21) Application number: **88121855.6**

(22) Date of filing: **29.12.88**

(51) Int. Cl.5: **C10M 169/02**, C10M 107/38, C10M 107/44, C10M 107/46, C10M 107/48, C10M 107/54, //(C10M169/02,107:38,107:44, 107:46,107:48,107:54,113:00, 117:00,119:02,119:22,119:24), C10N20:04,C10N50:10

# (54) New lubricant greases.

(30) Priority: **30.12.87 IT 2326487**

(43) Date of publication of application:
**05.07.89 Bulletin 89/27**

(45) Publication of the grant of the patent:
**05.05.93 Bulletin 93/18**

(84) Designated Contracting States:
**BE DE ES FR GB NL SE**

(56) References cited:
**EP-A- 0 165 649**
**EP-A- 0 165 650**
**GB-A- 1 309 401**
**US-A- 4 085 137**

(73) Proprietor: **AUSIMONT S.p.A.**
**Foro Buonaparte, 31**
**I-20121 Milano(IT)**

(72) Inventor: **Strepparola, Ezio, Dr.**
**6, viale Partigiano**
**I-24047 Treviglio Bergamo(IT)**
Inventor: **Alfieri, Mario, Dr.**
**8, via Casoretto**
**I-20100 Milan(IT)**
Inventor: **Gavezotti, Piero, Dr.**
**9, via Cimabue**
**I-20148 Milan(IT)**

(74) Representative: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

The present invention relates to new lubricant greases. More precisely, it relates to lubricating greases, the oily component of which consists of a perfluoropolyether or fluoropolyether derivative.

It is known that lubricating greases are preparable by mixing a perfluoropolyether free of functional groups, as oily component, with a finely powdered polytetrafluoroethylene, as tickening agent. The thus obtained greases exhibit excellent viscostaticity as a function of temperature, a low vapor tension and good lubricating properties under limit conditions (high loads and low speeds). Conversely, they exhibit poor lubricating properties under hydrodynamic conditions and, particularly, when utilized in machines running at high speeds. Furthermore, they do not impart a high corrosion resistance to the metal surfaces onto which they are applied.

Thus, it is an object of the present invention to provide new lubricant greases based on perfluoropolyether or fluoropolyether derivatives, which show excellent performance in applications where the parts to be lubricated run at high speeds, at the same time exhibiting the good performance of greases based on non-functional perfluoropolyethers as regards the viscostaticity as a function of temperature, the vapor tension and the lubricating properties under limit conditions.

Another object is to provide new lubricant greases which are suitable for imparting a high corrosion resistance to the metal surfaces onto which they are applied.

Still a further object is to provide new oils based on perfluoropolyether or fluoropolyether derivatives, which can be utilized as oily components also in combination with thickening agents other than polytetrafluoroethylene.

These and still other objects are achieved by the lubricating greases of the present invention. These greases are characteterized in that they contain a thickening agent and a perfluoropolyether or fluoropolyether derivative of formula $R-O-Q-CFX-(Y)_n-Z$ having a number average molecular weight ranging from 1500 to 10000, in which:

R is a perfluoroalkyl radical $R_F$ containing from 1 to 3 carbon atoms ($CF_3$, $C_2F_5$ and n- and i-$C_3F_7$) or is $Z-(Y)_n-CFX$;

Q is a perfluoroalkylpolyether or fluoroalkylpolyether chain;

X is F or $CF_3$;

Y is a linking divalent radical;

n is zero or 1 and

Z is a radical $Z_o$ selected from the group consisting of $-CH_2OH$, $-CH_2OR^1$, $-COOR^2$, $-CONR^3R^4$, $-CN$, $-CH_2NH_2$, $-CH_2NHR^5$, $-CH_2NR^6R^7$, $-CHOH-CH_2OH$ or $-COR^8$, wherein $R^1$, $R^2$, $R^3$, $R^4$, $R^5$, $R^6$, $R^7$ and $R^8$, either the same or different from each other, represent alkyl groups containing 1 to 8, preferably 1 to 4, carbon atoms (e.g. methyl, ethyl, n- and i-propyl, n-, i-, sec. and tert. butyl, pentyl, hexyl and octyl), aromatic groups containing 6 or 10 carbon atoms (e.g. phenyl and naphthyl) or alkylaromatic groups containing 7 to 11 carbon atoms (e.g. tolyl, xylyl, ethylphenyl, cumyl, methylnaphthyl), in which the aromatic ring or rings are optionally substituted with alkyl or polyethoxy groups.

As an alternative, Z is an organic group $Z_1$ selected from

a) non-aromatic-, non-fluorinated radicals containing two or more heteroatoms, the same or different from each other, selected from O, N, S, Se and P and located in position 1-3, 1-4 or 1-5 with respect to each other, and

b) aromatic radicals either containing or not containing one or more heteroatoms, the same or different from each other, selected from O, N, S, Se and P, such radicals being capable of giving rise to coordinative bonds or to charge transfer bonds.

Said non-aromatic radicals $Z_1$ may optionally have one or more substituents selected from $NO_2$, CN, $R^9$ or $OR^9$, in which $R^9$ is an alkyl radical containing 1 to 3 carbon atoms (methyl, ethyl, n- and i-propyl).

The thickening agents are generally selected from silica, clay earths, graphite, zinc oxide, polytetrafluoroethylene, polyureas, polyethylene, polypropylene, polyamides, polyimides, organic pigments and soaps.

Some examples of suitable clay earths are bentonites and hectorites. Silica, clay earths and graphite are optionally rendered organophilic by using known techniques. As organic pigments it is possible to use, for example, phthalocyanines.

Preferably, the thickening agent is polytetrafluoroethylene.

The perfluoroalkylpolyether or fluoroalkylpolyether chain Q is composed of oxaperfluoroalkylene or oxafluoroalkylene units of the following types:

I) $(CF_2-CF_2O)$ and $(CF_2O)$, such units being statistically distributed along the perfluoropolyether chain; or

II)

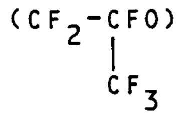

and (CFXO), wherein X is F or $CF_3$,
such units being statistically distributed along the chain; or

III) $(CF_2-CF_2O)$,

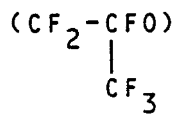

and CFXO),
where X is F or $CF_3$, such units being statistically distributed along the chain; or

IV)

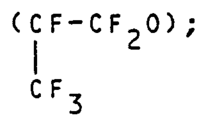

or

V) $(CF_2-CF_2-CF_2O)$; or

VI)

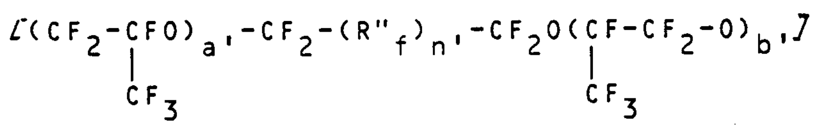

where $R''_f$ is a fluoroalkylene group; n′ is 0 or 1; a′ and b′ are integers or zero, the sum $(a'+b')$ being equal to or higher than 2; or

VII) $(CF_2-CF_2O)$; or

VIII)

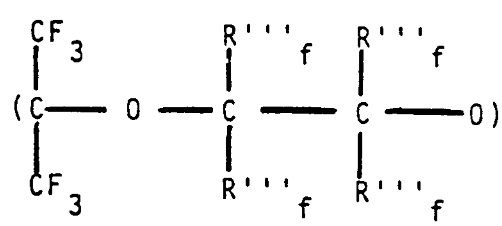

where the groups $R'''_f$, the same or different from each other, represent a fluorine atom or a perfluoroalkyl group; or

IX) $(CF_2O-CF_2-CF_2O)$; or

X) $(CH_2-CF_2-CF_2O)$; or

XI) $[(CF_2-CF_2-CH_2O)_{p'}-R^{iv}_f-O-(CH_2-CF_2-CF_2O)_{q'}]$ wherein $R^{iv}_f$ is a fluoroalkylene group and p′ and q′ are integers or zero, the sum of which being equal to or higher than 2.

The linking divalent radical Y is preferably selected from:
$-CH_2O-$, $-CH_2O-CH_2-$, $-CH_2-(OCH_2-CH_2)_m-$ wherein m ranges from 1 to 3, $-CF_2-$, $-CF_2O-$, $-CH_2-$, $-CH_2-CH_2-$, $-COS-$, $-CO-$ and $-CH_2S-$.

Other suitable linking divalent radicals Y are described in US-A-4 094 911.

The most preferred Y radicals are $-CH_2O-$, $-CH_2O-CH_2-$, $-CF_2-$, $-CH_2-$ and $-CO-$.
The group $-CFX-(Y)_n-$, in which n is zero or 1, makes it possible to introduce the radical Z in the perfluoropolyether molecule. When radical Y is present, it can also exert an influence on the chemical properties of radical Z.

The perfluoropolyether or fluoropolyether derivatives $R-O-Q-CFX-(Y)_n-Z$, which, for the sake of brevity, will hereinafter be referred to as functional derivatives of perfluoropolyethers or fluoropolyethers, are known compounds.
They can be predominantly bifunctional, i.e. of the type $Z-(Y)_n-CFX-Q-CFX-(Y)_n-Z$, or predominantly monofunctional, i.e. of the type $R_F-Q-CFX-(Y)_n-Z$.

The term "predominantly" is used because the monofunctional products, due to their method of preparation, are not obtained in 100% yield, but are accompanied by varying amounts of non-functional and bifunctional product.
Analogously, the bifunctional products are not obtained in 100% yield, but are accompanied by varying amounts of monofunctional product.

Usually, those products whose chains consist of oxyperfluoroalkylene units II and IV are monofunctional, while those whose chains consist of oxaperfluoroalkylene or oxafluoroalkylene units I, III, VI and XI are bifunctional. Finally, the products whose chains consist of oxaperfluoroalkylene or oxafluoroalkylene units V, VII, VIII and X can usually be either monofunctional or bifunctional.

Among the functionalized perfluoropolyethers and fluoropolyethers suitable for forming the greases of the present invention, there can be cited, for example, the ones belonging to the following classes:

A)

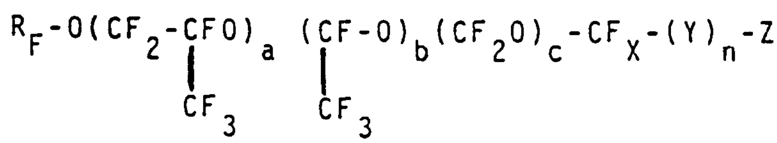

wherein $R_F$ is a perfluoroalkyl group containing 1 to 3 carbon atoms;
the units

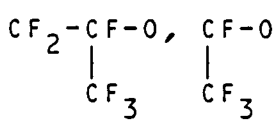

and $CF_2O$
are statistically distributed along the chain;
a, b and c are integers, the ratio

$$\frac{a}{b+c}$$

ranging from 5 to 15;

B) $Z-(Y)_n-CF_2-O-(C_2F_4O)_d(CF_2O)_e-CF_2-(Y)_n-Z$
wherein the units $C_2F_4O$ and $CF_2O$ are statistically distributed along the chain;
d and e are integers, the ratio d/e being from 0.3 to 5;

C)

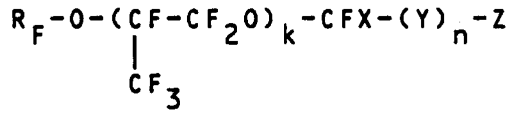

wherein $R_F$ is a perfluoroalkyl group containing 1 to 3 carbon atoms and k is an integer,
D)

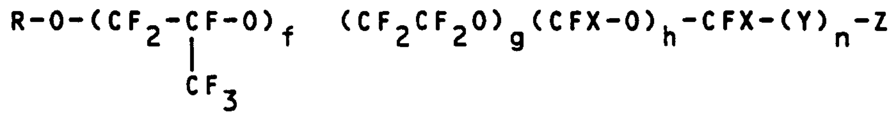

wherein R is $R_F$ (a perfluoroalkyl radical containing 1 to 3 carbon atoms) or $Z-(Y)_n-CFX$; the units

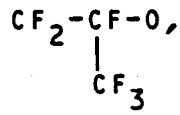

$CF_2CF_2O$, CFXO are statistically distributed along the chain; f, g and h are integers; the ratio

$$\frac{f}{g+h}$$

ranges from 1 to 10 and the ratio $\frac{g}{h}$ ranges from 1 to 10;
E)

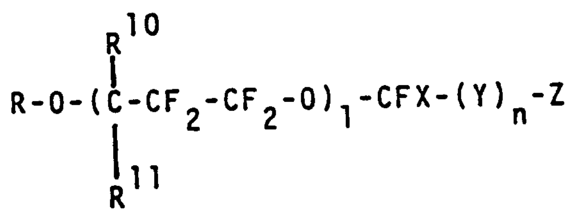

in which R is $R_F$ (a perfluoroalkyl radical containing from 1 to 3 carbon atoms) or $Z-(Y)_n-CFX-$; l is an integer and $R^{10}$ and $R^{11}$, the same or different from each other, are selected from H, Cl and F; a fluorine atom of the radicals $-CF_2-$ being optionally replaced by H, Cl, a perfluoroalkoxy group (preferably containing from 1 to 12 carbon atoms) or a perfluoroalkyl group (preferably containing from 1 to 4 carbon atoms). When the compound contains different units

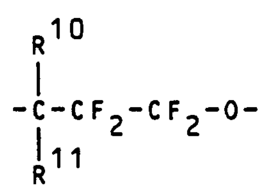

these units are statistically distributed along the chain.

As already mentioned herein, the functional groups $Z_o$ can carry radicals $R^1$, $R^2$, $R^3$, $R^4$, $R^5$, $R^6$, $R^7$ and $R^8$. When the aromatic ring or rings of these radicals carry alkyl groups, these groups preferably contain from 1 to 3 carbon atoms (i.e. methyl, ethyl and n– and i–propyl); when they carry polyethoxy groups,

these groups preferably contain from 1 to 6 ethoxy units.

The most preferred $Z_o$ groups are $-CH_2OH$, $-CONR^3R^4$, $-CH_2-NR^6R^7$ and $-CHOH-CH_2OH$. Functional groups $Z_1$, either non-aromatic or aromatic, are described in detail in EP-A-165 649 and 165 650. The non-aromatic radical preferably contains from 2 to 3 heteroatoms.

When the aromatic radical contains heteroatoms, it contains preferably 1 to 2 heteroatoms. Particularly suitable radicals $Z_1$ are the following:

1) 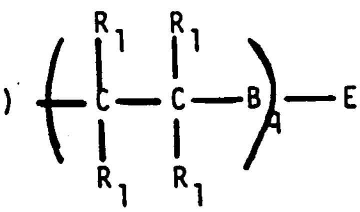

2) 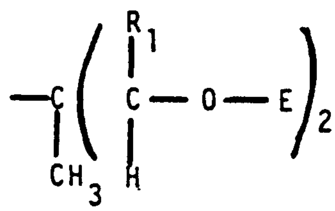

3) 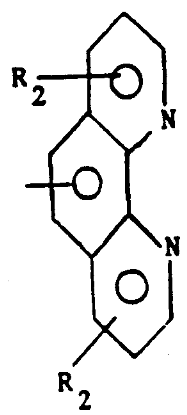

4) 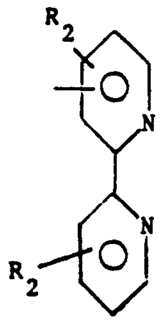

5) 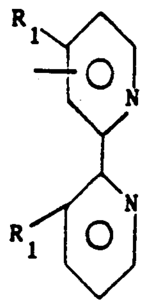

6) 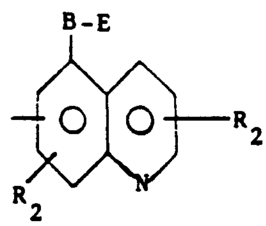

7) 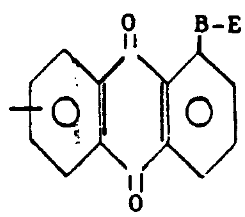

8) 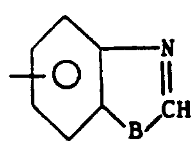

9) 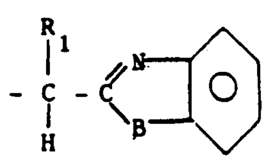

10) 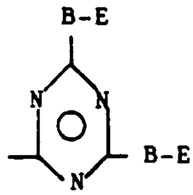

11) 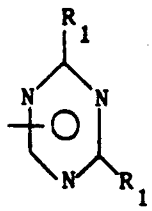

12) 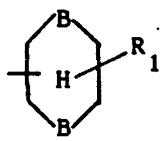

13) 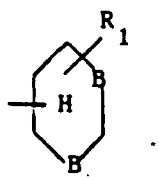

14)- 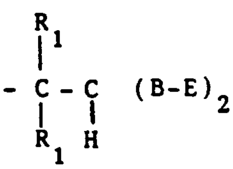

15) 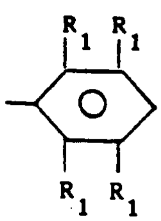

16) 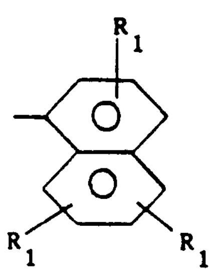

17) 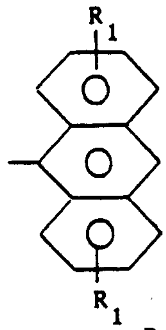

18) 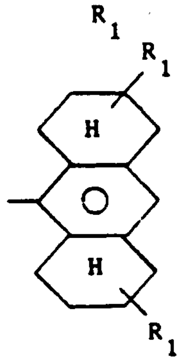

19) 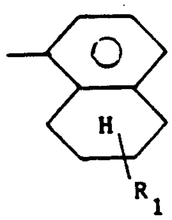

20) 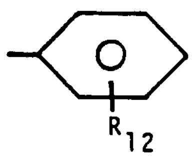

21) 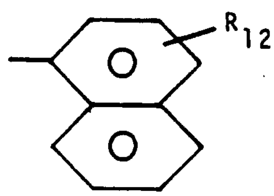

22) 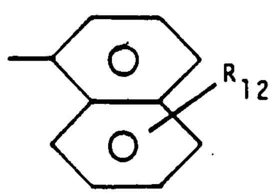

wherein:

| | |
|---|---|
| B | = O or S |
| E | = alkyl containing from 1 to 3 carbon atoms |
| $R_1$ | = H or alkyl containing from 1 to 3 carbon atoms |
| $R_2$ | = Cl, Br, H and/or alkoxy group of formula $E-O-$ |
| $R_{12}$ | = $NO_2$ or CN |
| q | = an integer ranging from 1 to 6 and preferably from 1 to 3. |

Other particularly suitable $Z_1$ radicals are the following:

23) 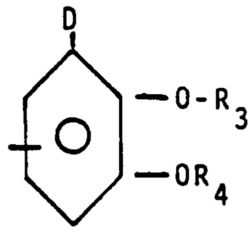

24) 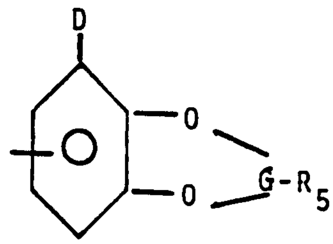

wherein:
$R_3$ and $R_4$, the same or different from each other, are alkyl radicals containing from 1 to 3 carbon atoms;
$R_5$ is a hydrogen atom or an alkyl radical containing from 1 to 3 carbon atoms;
D is a hydrogen atom or a radical $OR_5$ in which $R_5$ is the same as defined hereinabove
G represents a group $>CH-$ or a group $>CH-CH_2-$.

The preferred $Z_1$ radicals are those designated by numbers 1, 8, 9, 15, 16, 20, 21, 22 and 24.

The number average molecular weight of the functionalized perfluoropolyether or fluoropolyether preferably ranges from 1800 to 5000.

The grease according to the present invention usually contains from 60 to 90% by weight of functionalized perfluoropolyether or fluoropolyether.

Of course, instead of only one functionalized perfluoropolyether or fluoropolyether it is possible to use a mixture of two or more functionalized perfluoropolyethers or fluoropolyethers.

It is possible also to use a mixture of a functionalized perfluoropolyether or fluoropolyether with a non-functionalized perfluoropolyether or fluoropolyether having a number average molecular weight ranging from 1500 to 10000 and formula $R^1{}_F-O-Q-R^2{}_F$, where $R^1{}_F$ and $R^2{}_F$, the same or different from each other, are perfluoroalkyl radicals containing from 1 to 3 carbon atoms while Q is a perfluoroalkylpolyether or fluoroalkylpolyether chain, either the same or different from the chain of the functionalized perfluoropolyether or fluoropolyether.

In the non-functionalized perfluoropolyether or fluoropolyether the chain Q can be of any of the types defined for the functionalized perfluoropolyethers and fluoropolyethers.

When using a mixture of the two types of perfluoropolyethers or fluoropolyethers, the grease according to the present invention usually contains from 30 to 45% by weight of functionalized oil and from 30 to 45% by weight of non-functionalized oil, the total amount of oil ranging from 60 to 90% by weight.

The perfluoropolyethers and the fluoropolyethers, either functionalized or non-functionalized, are known compounds and are described, for example, in US-A-3,242,218, 3,655,041, 3,715,378, 3,810,874, 3,847,978 and 4,523,039, IT-A-903,446, EP-A-148,482, 151,877, 165,649, 165,650 and 224,201 and in PCT-A-WO 87/00538 and WO 87/02992.

In the preparation of the greases, starting from the perfluoropolyether or fluoropolyether oils and from the thickening agents, known techniques are employed which are based on processes suitable for the optimization of the interpenetration of the components of the mixture, by vacuum mixing techniques or by using volatile substances which wet and suspend the thickening agent.

When polytetrafluoroethylene is used as thickening agent, the method described in US-A-4,472,290 can be followed.

It is possible to start from polytetrafluoroethylene either in powdered form or suspended in a chlorofluorocarbon solvent.

When starting from the powder, the same is first subjected to degassing. This step is carried out at temperatures e.g. ranging from 20 to 60 °C, preferably at about 50 °C.

A vacuum generally ranging from $10^{-3}$ to 10 torr (1 Torr = 133,3 Pa), is applied for a period of time usually ranging from 1 to 5 hours, preferably for about 2 hours.

The perfluoropolyether or fluoropolyether oil is separately degassed by following the same procedure. Then the powder is caused to be imbibed by the oil. The step is generally conducted at temperatures ranging from 20 to 60 °C and preferably at about 30 °C; the vacuum applied generally ranges from $10^{-3}$ to 10 torr for a period of time generally ranging from 8 to 12 hours.

Subsequently the mixture is kneaded in a kneading machine, at temperatures usually ranging from 20 to 60 °C and preferably at room temperature. A vacuum generally ranging from $10^{-3}$ to 10 torr is employed for usually 6 to 10 hours. An apparatus suitable for carrying out this step is, for example, a rotary arm kneading machine.

Thereupon, the grease is homogenized in, for example, a 3-cylinder grinder or in a compressor of the Maunton Goulin type. Homogenisation is usually brought about at atmospheric pressure and at a temperature of from 20 to 60 °C, preferably at room temperature. If the polytetrafluoroethylene particles are too large, they are ground in the course of this step.

When a polytetrafluoroethylene suspension is utilized, the chlorofluorocarbon in which the polymer is dispersed is, for example, 1,1,2-trichloro-1,2,2-trifluoroethane.
The concentration of the polymer in the suspension ranges, for example, from 5 to 10% by weight.

In this case, only the oil is degassed according to the procedure described hereinbefore. The mixture is then directly kneaded at a temperature which is sufficiently high to permit a complete evaporation of the solvent, optionally operating under vacuum. The oil is made to drop slowly while the solvent evaporates, continuing mixing for a period of time of generally 8 to 10 hours.

Then follows a homogenization carried out according to the procedure described above.
The size of the polytetrafluoroethylene particles in the grease is generally below 20 μm, preferably below 10 μm.

The greases according to the present invention, due to the low ratio of the static and the dynamic friction coefficients, exhibit good antistick and slip properties, and therefore reduce vibrations in high-speed applications. Consequently, they are particularly suitable for said applications, e.g. for the lubrication of ball bearings or of cylindrical roller bearings rotating at 10000 - 20000 r.p.m. with low radial loads (for example of 25 kg), making possible running periods of at least 500 hours.

Furthermore they impart a good corrosion resistance to the metal surfaces onto which they are applied.

The lubricating film also exhibits an excellent tightness (continuity).

All these properties could not be realized with greases based on polytetrafluoroethylene and non-functionalized perfluoropolyethers. Compared to the non-functionalized perfluoropolyether oils, a further advantage resides in the fact that the functionalized perfluoropolyether and fluoropolyether oils can be used with thickening agents other than polytetrafluoroethylene.

The following examples are given to illustrate the present invention.

Example 1

The functionalized perfluoropolyether oil employed had the formula:

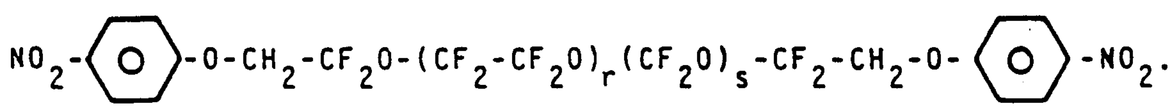

The r/s ratio was 0.8 and the number average molecular weight was 4770.
This oil was prepared starting from

$$HO-CH_2-CF_2O-(CF_2-CF_2O)_r(CF_2O)_s-CF_2-CH_2OH$$

by reaction with NaH and, subsequently, with

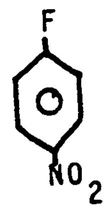

The thickening agent was powdered poly(tetrafluoroethylene) having an average diameter of the agglomerates of 10 µm. The oil (193 g) and the thickening agent (107 g) were separately degassed for 60 minutes under vacuum (5 mm Hg) (1 mm Hg = 133,3 Pa) at 60 °C. The imbibition of the thickening agent was carried out within 12 hours under vacuum (5 mm Hg). Mixing was then achieved by use of a rotary arm kneading machine. The kneading lasted 8 hours under vacuum (5 mm Hg), whereafter the product was homogenized in a 3-cylinder grinder.

The thus obtained grease, without being subjected to any further treatment, exhibited a penetration of 280 mm/10 according to test ASTM D217, corresponding to a NLGI (National Lubricating Grease Institute) degree of 2.

Its oil loss at 204 °C during 30 hours, according to standard FTMS 791-321, was 8%.
The corrosion strength, measured by the Emkor test (DIN 51802), was 1/2.
Typically, when subjected to the Emkor test, the greases based on non-functionalized perfluoropolyethers and on polytetrafluoroethylene show a value of 5/5.

The grease according to the present invention was compared, in a high speed application, to a grease prepared starting from polytetrafluoroethylene and a non-functionalized perfluoropolyether of formula:

$$CF_3-O-(CF_2-CF_2O)_r-(CF_2O)_s-CF_3$$

having a r/s ratio of 0.8 and a number average molecular weight of 10000.

The latter grease was prepared by using the same amounts of oil and thickening agent and according to the same procedure used in the case of the grease of the present invention.

The comparison was made on two SKF ball bearings having an outside diameter of 72 mm and rotating at 15000 r.p.m. with an applied radial load of 25 kg. The bearing lubricated with the grease prepared from a non-functionalized perfluoropolyether could only be operated for 48 hours. The bearing lubricated with the grease of the present invention went on running for three weeks (i.e. until discontinuation of the test).

Example 2

The procedure described in Example 1 was repeated, mixing 240 g of the oil of Example 1 with 106 g of powdered PTFE (average diameter of the agglomerates: 10 µm).
Obtained was a grease which exhibited a penetration of 320 mm/10 (NLGI degree = 1) and an oil loss at 204 °C/30 h of 10%.

Example 3

The functionalized perfluoropolyether oil had the formula:

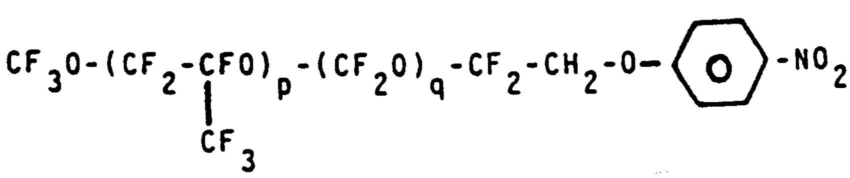

The p/q ratio was 10 and the number average molecular weight thereof was 1910.
This compound was prepared starting from:

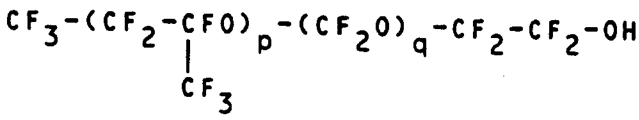

in the same way as the compound of Example 1.

Following the procedure of Example 1, 190 g of this compound were mixed with 102 g of powdered PTFE (average diameter of the agglomerates: 10 µm). Obtained was a grease having a NLGI consistency degree of 2 and an oil loss at 204 °C/30 h of 7.8%.

In the Emkor test a value of 1/1 was determined.

Example 4

The functionalized perfluoropolyether oil had the formula:

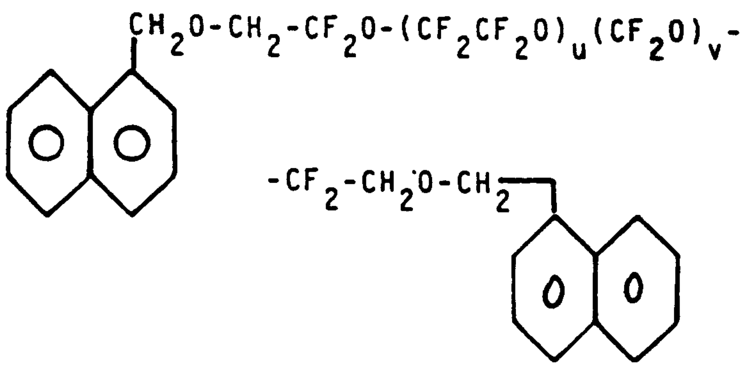

This oil was prepared starting from:

$HO-CH_2-CF_2O-(CF_2-CF_2O)_u(CF_2O)_v-CF_2-CH_2OH$

by etherification reaction of the corresponding sodium alcoholate with 1-naphthyl chloride.

The procedure of Example 1 was repeated by mixing 192 g of oil with 110 g of powdered PTFE (average diameter of the agglomerates: 10 µm).

Obtained was a grease, which, without being subjected to any further processing, exhibited a penetration of 283 mm/10 (NLGI degree = 2) and an oil loss at 204 °C/30 h of 8.2%.

In the Emkor test a value of 2/2 was determined.

Example 5

The oil of Example 4 and a PTFE suspension (7.5% by weight in 1,1,2-trichloro-1,2,2-trifluoroethane) were employed. The average diameter of the PTFE particle agglomerates was ≦ 5 µm.

In a kneading machine there were mixed 200 g of the oil, which had been previously degassed under vacuum (5 mm), with 470 g of PTFE suspension. The mixture was heated at 60 °C, allowing the solvent to evaporate and slowly adding the oil in about 2 hours under stirring.

Kneading was carried out for a total of 8 hours and the grease was homogenized in the 3-cylinder grinder.

The product exhibited a penetration, without further processing, of 280 mm/10 (NLGI consistency degree = 2) and an oil loss at 204 °C/30 h of 9%.

Example 6

The functionalized perfluoropolyether oil of Example 4 and the PTFE suspension of Example 5 were used. The procedure of Example 4 was repeated, mixing 290 g of oil with 470 g of suspension.

The grease exhibited a penetration of 370 mm/10 (NLGI consistency degree = 0).

Example 7

The functionalized perfluoropolyether oil had the formula:

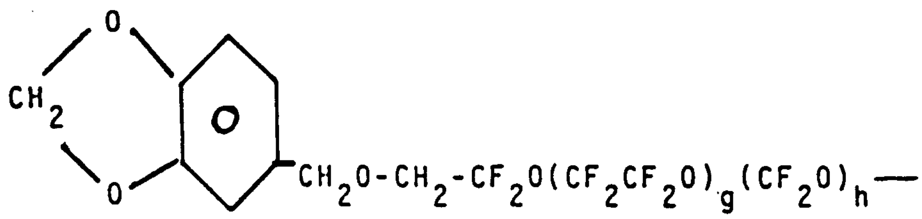

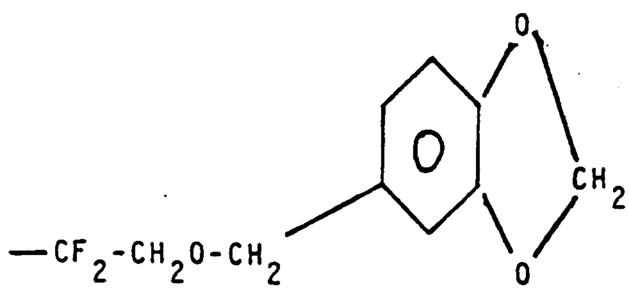

The g/h ratio was 0.8 and the number average molecular weight was 2450.
The oil was prepared by reacting the corresponding alcoholate with 3,4 – methylene dioxybenzyl chloride.
As thickening agent the powdered PTFE of Example 1 was employed. The procedure of Example 1 was repeated, using the same quantities of oil and thickener as in Example 1. A grease having a NLGI consistency degree of 2 was obtained.
The Emkor test yielded a value of 2/2.

Example 8

The functionalized perfluoropolyether oil had the formula:

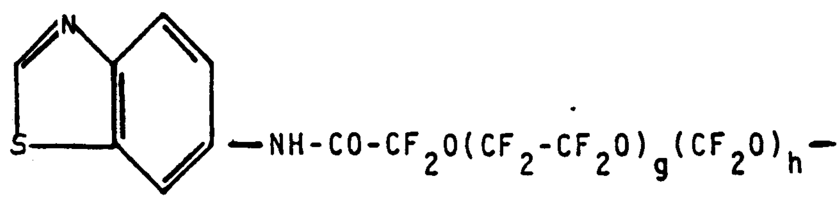

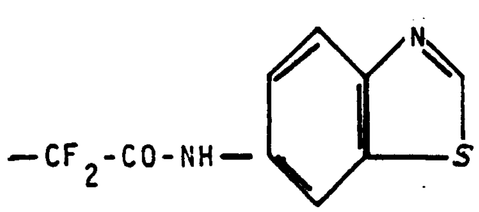

The g/h ratio was 0.8 and the number average molecular weight was 2450.
The oil was prepared by reacting:

$C_6H_5-O-CO-CF_2O-(CF_2-CF_2O)_g(CF_2O)_h-CF_2-CO-O-C_6H_5$

with

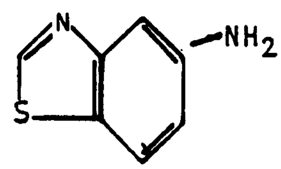

The thickening agent was the powdered PTFE of Example 1.

The procedure of Example 1 was repeated, using the same amounts of oil and thickening agent as in Example 1.

The thus obtained grease had a NLGI consistency degree of 2 and an oil loss at 204°C/30 h of 8%.

The Emkor test result was 0/0.

Example 9

The functionalized perfluoropolyether oil had the formula:

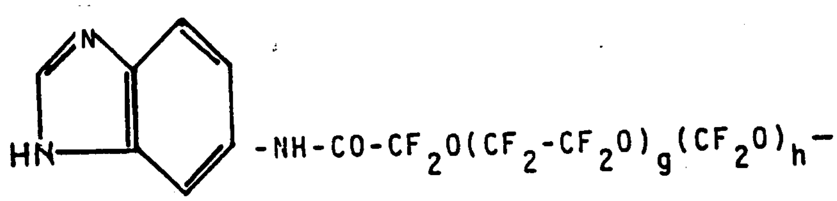

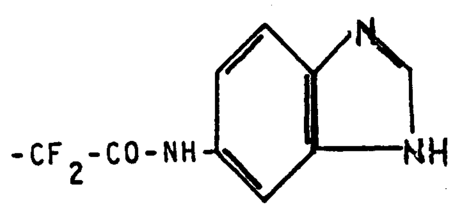

The g/h ratio was 0.8 and the number average molecular weight was of 2450.

The oil was prepared by reacting

$$C_6H_5-O-CO-CF_2O-(CF_2-CF_2O)_g(CF_2O)_h-CF_2-CO-O-C_6H_5$$

with

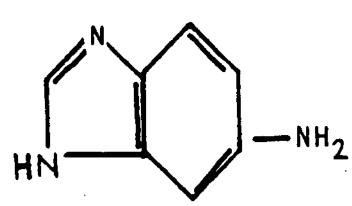

The thickening agent was the PTFE powder of Example 1.

The procedure of Example 1 was repeated, using the same amounts of oil and of thickening agent as in Example 1.

The grease obtained had a NLGI consistency degree of 2 and an oil loss at 204°C/30 h of 8.3%.

The result obtained from the Emkor test was 0/0.

Example 10

The functionalized perfluoropolyether oil had the formula:

$$HOCH_2-CF_2O-(CF_2-CF_2O)_g(CF_2O)_h-CF_2-CH_2OH$$

The g/h ratio was 0.8 and the number average molecular weight was 2180.
The thickening agent was the PTFE powder of Example 1.
The procedure of Example 1 was repeated, using the same amounts of oil and of thickening agent as in Example 1.
Obtained was a grease having a NLGI consistency degree of 2 and an oil loss at 204°C/30 h of 8%.
The Emkor test result was 0/0.

## Claims

**1.** Lubricant greases containing a thickening agent and a perfluoropolyether or fluoropolyether having a functional group Z selected from

1) 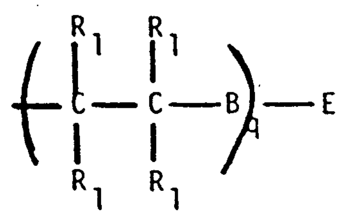

2) 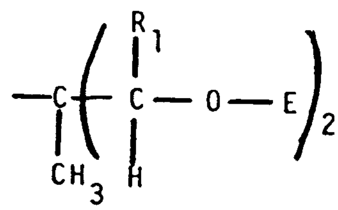

3) 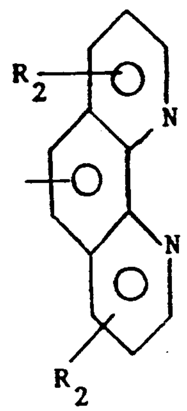

4) 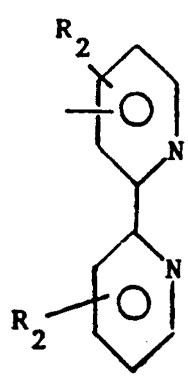

5) 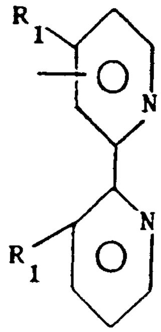

6) 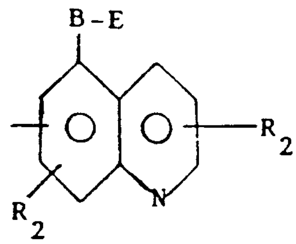

7) 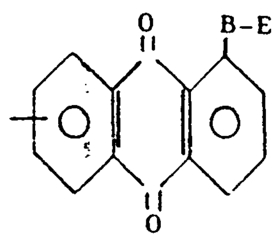

8) 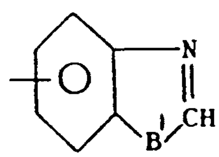

9) 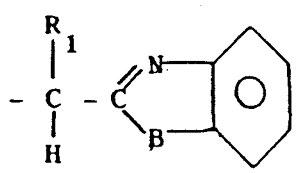

10) 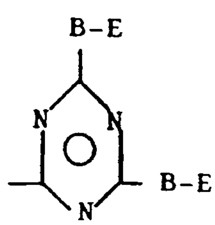

11) 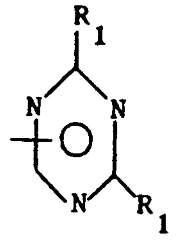

12) 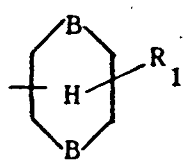

13) 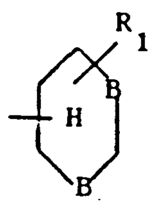

14) 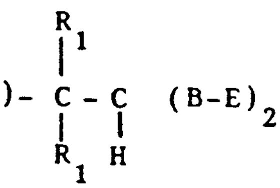

15) 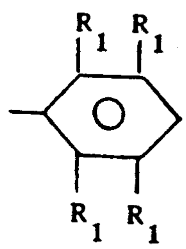

16) 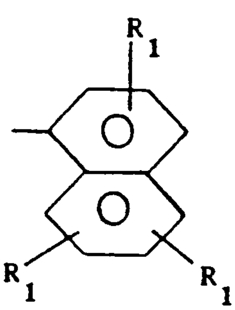

17) 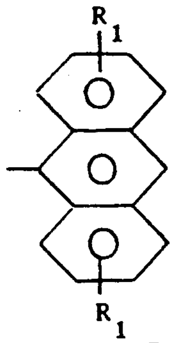

18) 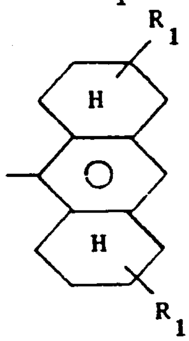

19) 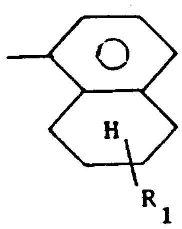

20) 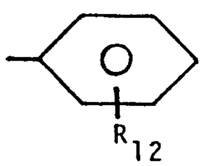

21) 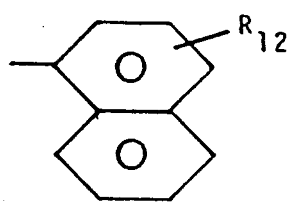

22) 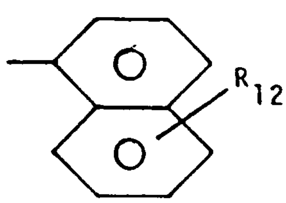

wherein:

| | | |
|---|---|---|
| B | = | O or S |
| B' | = | O, S or NH |
| E | = | alkyl containing from 1 to 3 carbon atoms |
| $R_1$ | = | H or alkyl containing from 1 to 3 carbon atoms |
| $R_2$ | = | Cl, Br, H and/or alkoxy group of formula $E-O-$ |

$R_{12}$ = $NO_2$ or CN
q = an integer ranging from 1 to 6 and preferably from 1 to 3;

23)

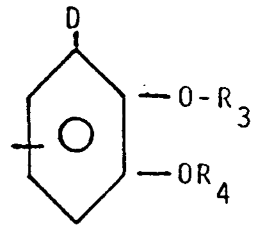

24)

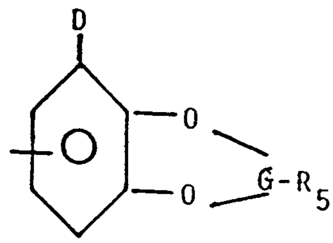

wherein:
$R_3$ and $R_4$, the same or different from each other, are alkyl radicals containing from 1 to 3 carbon atoms;
$R_5$ is a hydrogen atom or an alkyl radical containing from 1 to 3 carbon atoms;
D is a hydrogen atom or a radical $OR_5$ in which $R_5$ is the same as defined hereinabove
G represents a group $>CH-$ or a group $>CH-CH_2-$;
characterized in that said (per)fluoropolyether is used as the only lubricating component of the grease, has a number average molecular weight of from 1500 to 10000 and is of the general formula $R-O-Q-CFX-(Y)_n-Z$ in which Z is as defined above; R is a perfluoroalkyl radical $R_F$ containing 1 to 3 carbon atoms or is $Z-(Y)_n-CFX$;
X is F or $CF_3$;
Y is selected from $-CH_2O-$, $-CH_2O-CH_2-$, $-CH_2-(OCH_2-CH_2)_m-$ wherein m ranges from 1 to 3, $-CF_2-$, $-CF_2O$, $-CH_2-$, $-CH_2-CH_2-$, $-COS-$, $-CO-$, $-CONH-$ and $-CH_2S-$;
n is zero or 1; and
Q is a perfluoroalkylpolyether or fluoroalkylpolyether chain selected from chains having the following oxaperfluoroalkylene and oxafluoroalkylene units:

I) $(CF_2-CF_2O)$ and $(CF_2O)$ , said units being statistically distributed along the perfluoropolyether chain;

II)

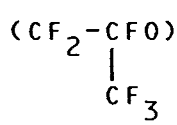

and (CFXO), wherein X is F or $CF_3$, said units being statistically distributed along the chain;

III) $(CF_2-CF_2O)$,

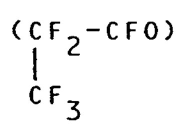

and (CFXO),

wherein X is F or $CF_3$, said units being statistically distributed along the chain;
IV)

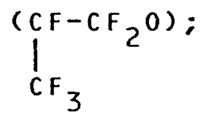

V) $(CF_2-CF_2-CF_2O)$;
VI)

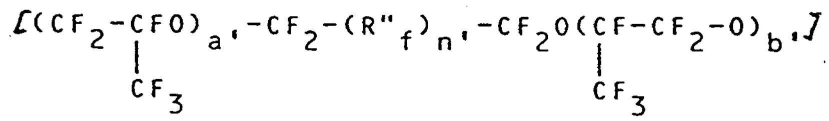

wherein $R''_f$ is a fluoroalkylene group; n' is 0 or 1; a' and b' are integers or zero, the sum (a' + b') being equal to or higher than 2;
VII) $(CF_2-CF_2O)$;
VIII)

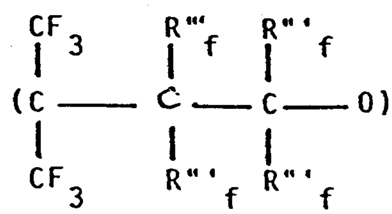

where the groups $R'''_f$, the same or different from each other, represent a fluorine atom or a perfluoroalkyl group;
IX) $(CF_2O-CF_2-CF_2O)$;
X) $(CH_2-CF_2-CF_2O)$;
XI) $[(CF_2-CF_2-CH_2O)_{p'}-R^{iv}_f-O-(CH_2-CF_2-CF_2O)_{q'}]$
wherein $R^{iv}_f$ is a fluoroalkylene group and p' and q' are integers or zero, the sum (p' + q') being higher than 2; provided that when B' in formula 8) is NH, Y is −CONH− and that Y is −CONH− only when Z is represented by formula 8) wherein B' is NH or S.

2. Greases according to claim 1, characterized in that the thickening agent is selected from silica, clay earths, graphite, zinc oxide, polytetrafluoroethylene, polyureas, polyethylene, polypropylene, polyamides, polyimides, organic pigments and soaps.

3. Greases according to claim 2, characterized in that the thickening agent is polytetrafluoroethylene.

4. Greases according to one or more of the preceding claims, characterized in that the number average molecular weight of the perfluoropolyether or fluoropolyether derivative ranges from 1800 to 5000.

5. Greases according to one or more of the preceding claims, characterized in that they contain from 60 to 90% by weight of perfluoropolyether or fluoropolyether derivative.

**Patentansprüche**

1. Schmierfette, die ein Verdickungsmittel und einen Perfluorpolyether oder Fluorpolyether mit einer funktionellen Gruppe Z, die ausgewählt ist aus

1) 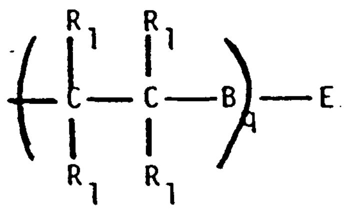

2) 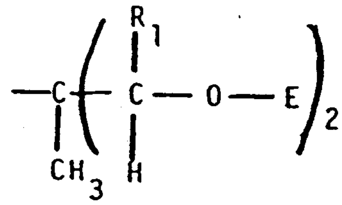

3) 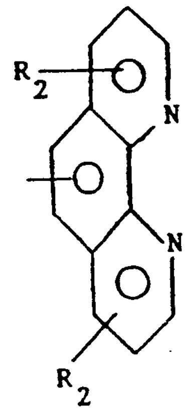

4) 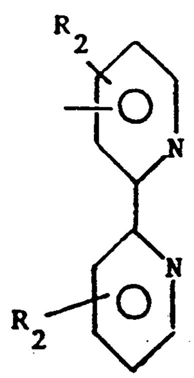

5)

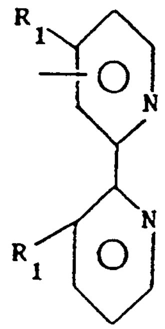

6)

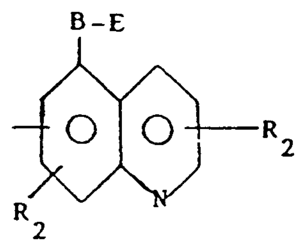

7)

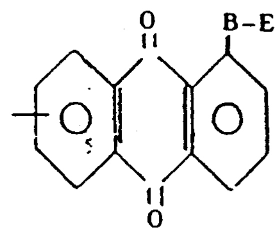

8)

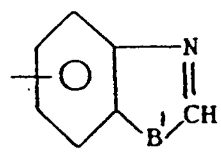

9)

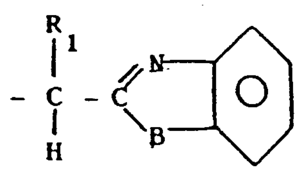

10)

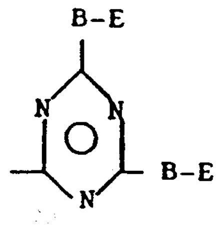

11) 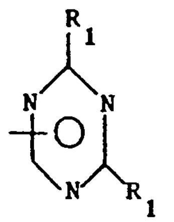

12) 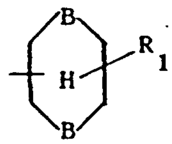

13) 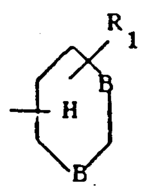

14) 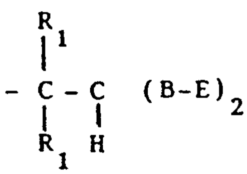

15) 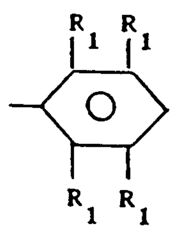

16) 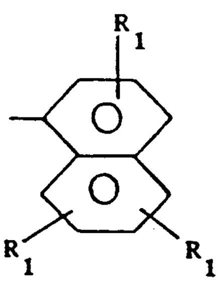

17) 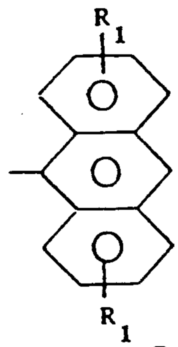

18) 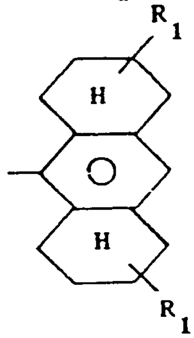

19) 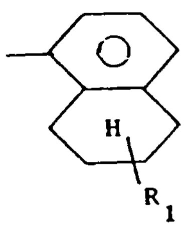

20) 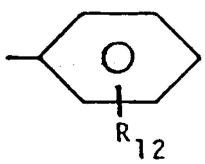

21) 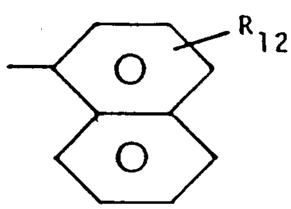

22) 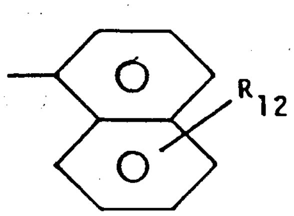

worin:

B = O oder S

B' = O, S oder NH

E = 1 bis 3 Kohlenstoffatome enthaltendes Alkyl

$R_1$ = H oder 1 bis 3 Kohlenstoffatome enthaltendes Alkyl

$R_2$ = Cl, Br, H und/oder eine Alkoxygruppe der Formel E − O

$R_{12}$ = $NO_2$ oder CN

q = eine ganze Zahl im Bereich von 1 bis 6 und vorzugsweise 1 bis 3;

23) 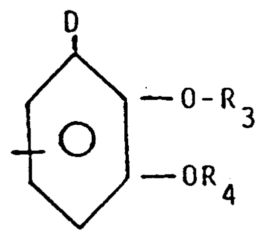

24) 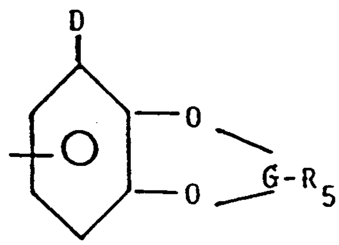

worin:

$R_3$ und $R_4$, gleich oder verschieden voneinander, für 1 bis 3 Kohlenstoffatome enthaltende Alkylreste stehen;

$R_5$ für ein Wasserstoffatom oder einen 1 bis 3 Kohlenstoffatome enthaltenden Alkylrest steht;

D ein Wasserstoffatom oder ein Rest $OR_5$ ist, in welchem $R_5$ gleich wie oben definiert ist

G eine Gruppe $>CH-$ oder eine Gruppe $>CH-CH_2-$ darstellt; enthalten,

dadurch gekennzeichnet, daß der (Per)fluorpolyether als die einzige schmierende Komponente des Fettes verwendet wird, ein Zahlenmittel des Molekulargewichts von 1500 bis 10000 aufweist und die allgemeine Formel $R-O-Q-CFX-(Y)_n-Z$ hat, in welcher Z wie oben definiert ist; R ein Perfluoralkylrest $R_F$, der 1 bis 3 Kohlenstoffatome enthält, oder $Z-(Y)_n-CFX$ ist;

X für F oder $CF_3$ steht;

Y ausgewählt ist aus $-CH_2O-$, $-CH_2O-CH_2-$, $-CH_2-(OCH_2-CH_2)_m-$, worin m im Bereich von 1 bis 3 liegt, $-CF_2-$, $-CF_2O-$, $-CH_2-$, $-CH_2-CH_2-$, $-COS-$, $-CO-$, $-CONH-$ und $-CH_2S-$;

n 0 oder 1 ist; und

Q eine Perfluoralkylpolyether- oder Fluoralkylpolyetherkette ist, die aus Ketten ausgewählt ist, die die folgenden Oxaperfluoralkylen- und Oxafluoralkylen-Einheiten aufweisen:

I) $(CF_2-CF_2O)$ und $(CF_2O)$, wobei diese Einheiten statistisch entlang der Perfluorpolyetherkette verteilt sind;

II)

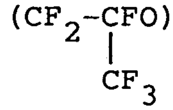

und (CFXO), worin X für F oder $CF_3$ steht, wobei diese Einheiten statistisch entlang der Kette verteilt sind;

III) $(CF_2-CF_2O)$,

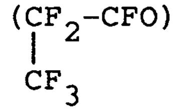

und (CFXO),
worin X für F oder $CF_3$ steht, wobei diese Einheiten statistisch entlang der Kette verteilt sind;
IV)

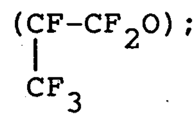

V) $(CF_2-CF_2-CF_2O)$;
VI)

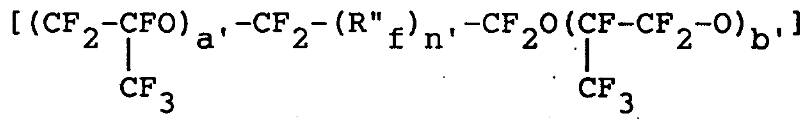

worin $R''_f$ eine Perfluoralkylengruppe ist; n' 0 oder 1 ist; a' und b' ganze Zahlen oder 0 sind, wobei die Summe (a' + b') gleich oder größer als 2 ist;
VII) $(CF_2-CF_2O)$;
VIII)

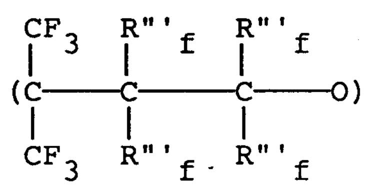

worin die Gruppen $R'''_f$, gleich oder verschieden voneinander, ein Fluoratom oder eine Perfluoralkylgruppe darstellen;
IX) $(CF_2O-CF_2-CF_2O)$;
X) $(CF_2-CF_2-CF_2O)$;
XI) $[(CF_2-CF_2-CH_2O)_{p'}-R^{iv}_f-O-(CH_2-CF_2-CF_2O)_{q'}]$
worin $R^{iv}_f$ eine Fluoralkylengruppe ist und p' und q' ganze Zahlen oder 0 sind, wobei die Summe (p' + q') größer als 2 ist;
mit der Maßgabe, daß wenn B' in Formel 8) für NH steht, Y −CONH− bedeutet und daß Y nur dann −CONH− ist, wenn Z durch Formel 8) worin B' für NH oder S steht, dargestellt wird.

**2.** Fette nach Anspruch 1, dadurch gekennzeichnet, daß das Verdickungsmittel aus Kieselsäure, Tonerden, Graphit, Zinkoxid, Polytetrafluorethylen, Polyharnstoffen, Polyethylen, Polypropylen, Polyamiden, Polyimiden, organischen Pigmenten und Seifen ausgewählt ist.

**3.** Fette nach Anspruch 2, dadurch gekennzeichnet, daß das Verdickungsmittel Polytetrafluorethylen ist.

**4.** Fette nach einem oder mehr der vorangehenden Ansprüche, dadurch gekennzeichnet, daß das Zahlenmittel des Molekulargewichts des Perfluorpolyether− oder Fluorpolyether−Derivats im Bereich von 1800 bis 5000 liegt.

**5.** Fette nach einem oder mehr der vorangehenden Ansprüche, dadurch gekennzeichnet, daß sie 60 bis 90 Gew.−% Perfluorpolyether− oder Fluorpolyether−Derivat enthalten.

**Revendications**

**1.** Graisses lubrifiantes contenant un agent épaississant et un perfluoropolyéther ou un fluoropolyéther ayant un groupe fonctionnel Z choisi parmi les suivants:

1)

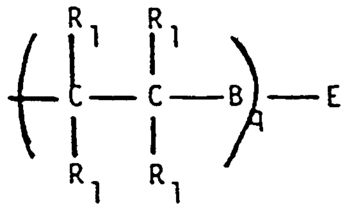

2)

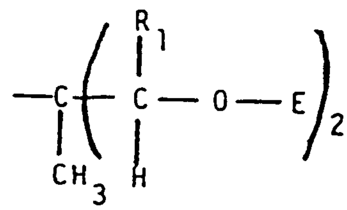

3)

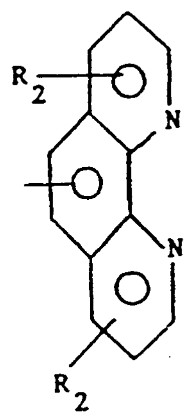

4)

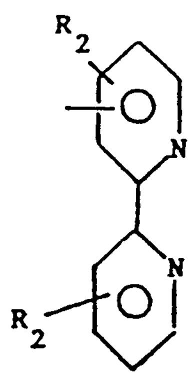

5) 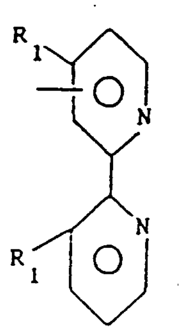

6) 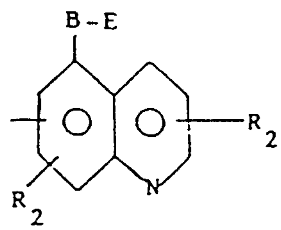

7) 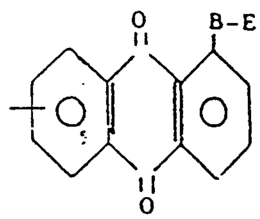

8) 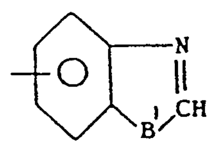

9) 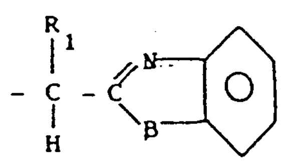

10) 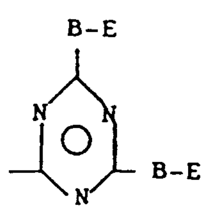

11) 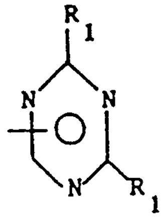

12) 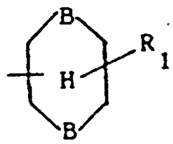

13) 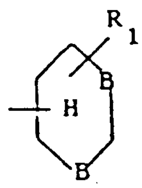

14) 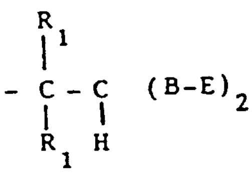

15) 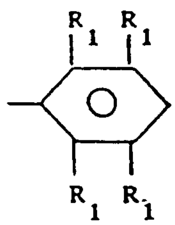

16) 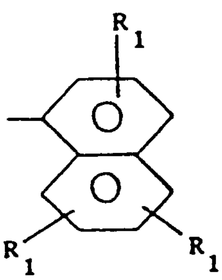

17) 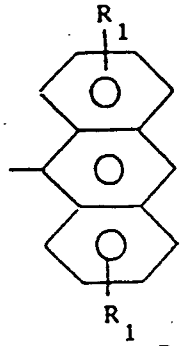

18) 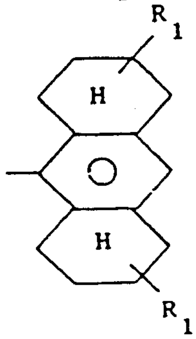

19) 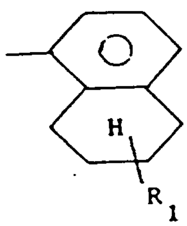

20) 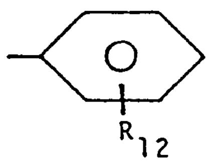

21) 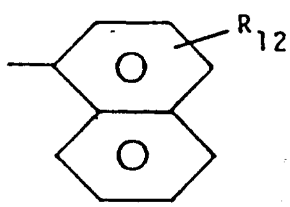

22) 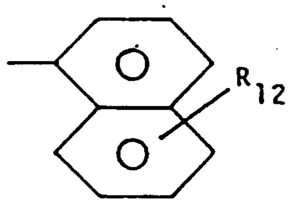

dans lesquels:

- B est O ou S;
- B' est O, S ou NH;
- E est un groupe alkyle contenant de 1 à 3 atomes de carbone;
- $R_1$ est un atome d'hydrogène ou un groupe alkyle contenant de 1 à 3 atomes de carbone;
- $R_2$ est un atome de chlore, de brome, d'hydrogène et/ou un groupe alcoxy de formule $E-O-$;

$R_{12}$ est $NO_2$ ou CN:
q est un nombre entier compris entre 1 et 6 et de préférence entre 1 et 3:

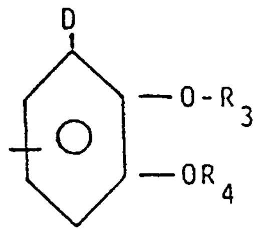

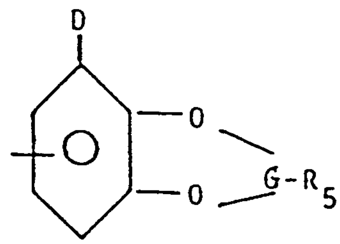

dans lesquels:

$R_3$ et $R_4$, identiques ou différents l'un de l'autre, sont des radicaux alkyle contenant de 1 à 3 atomes de carbone;

$R_5$ est un atome d'hydrogène ou un radical alkyle contenant de 1 à 3 atomes de carbone;

D est un atome d'hydrogène ou un radical $OR_5$ dans lequel $R_5$ est tel que défini plus haut;

G représente un groupe $=CH-$ ou un groupe $=CH-CH_2-$;

caractérisées en ce que ce (per)fluoropolyéther est utilisé en tant qu'unique composant lubrifiant de la graisse, qu'il a un poids moléculaire moyen en nombre de 1500 à 10 000 et il est représenté par la formule générale:

$R-O-Q-CFX-(Y)_n-Z$

dans laquelle:

Z est tel que défini plus haut;

R est un radical $R_F$ perfluoroalkyle contenant 1 à 3 atomes de carbone ou un groupe $Z-(Y)_n-CFX$;

X est F ou $CF_3$;

Y est choisi parmi $-CH_2O-$, $-CH_2O-CH_2-$, $-CH_2-(OCH_2-CH_2)_m-$ dans lequel m est compris entre 1 et 3, $-CF_2-$, $-CF_2O-$, $-CH_2-$, $-CH_2-CH_2-$, $-COS-$, $-CO-$, $-CONH-$ et $-CH_2S-$;

n est zéro ou 1; et

Q est une chaîne perfluoroalkylpolyéther ou fluoroalkylpolyéther choisie parmi les chaînes ayant des unités oxaperfluoroalkylène et oxafluoroalkylène suivantes:

I) $(CF_2-CF_2O)$ et $(CF_2O)$, ces unités étant distribuées de façon aléatoire le long de la chaîne perfluoropolyéther;

II)

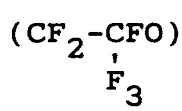

et (CFXO), dans laquelle X est F ou $CF_3$, ces unités étant distribuées de façon aléatoire le long de la chaîne;

III) $(CF_2-CF_2O)$,

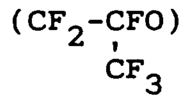

et (CFXO), dans laquelle X est F ou $CF_3$, ces unités étant distribuées de façon aléatoire le long de la chaîne;

IV)

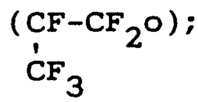

V) $(CF_2-CF_2-CF_2O)$;

VI)

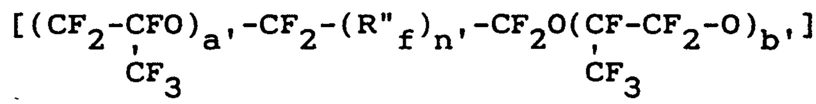

dans laquelle:

- $R''_f$ est un groupe fluoroalkylène;
- n' est 0 ou 1;
- a' et b' sont des nombres entiers ou zéro, la somme (a' + b') étant égale ou supérieure à 2;

VII) $(CF_2-CF_2O)$;

VIII)

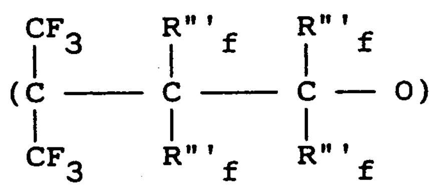

dans laquelle les groupes $R'''_f$, identiques ou différents les uns des autres, représentent un atome de fluor ou un groupe perfluoroalkyle;

IX) $(CF_2O-CF_2-CF_2O)$;

X) $(CH_2-CF_2-CF_2O)$;

XI) $[(CF_2-CF_2-CH_2O)_{p'}-R^{iv}_f-O-(CH_2-CF_2-CF_2O)_{q'}]$ dans laquelle:

- $R^{iv}$ est un groupe fluoroalkylène, et
- p' et q' sont des nombres entiers ou zéro, dont la somme est égale ou supérieure à 2, à condition que lorsque B' dans la formule (8) est NH, Y soit −CONH− et que Y soit −CONH− uniquement lorsque Z est représenté par la formule (8) dans laquelle B' est NH ou S.

**2.** Graisses suivant la revendication 1, caractérisées en ce que l'agent épaississant est choisi parmi la silice, des argiles, du graphite, de l'oxyde de zinc, un polytétrafluoroéthylène, des polyurées, un polyéthylène, un polypropylène, des polyamides, des polyimides, des pigments organiques et des savons.

**3.** Graisses suivant la revendication 2, caractérisées en ce que l'agent épaississant est un polytétrafluoroéthylène.

4. Graisses suivant l'une quelconque des revendications précédentes, caractérisées en ce que le poids moléculaire moyen en nombre du dérivé de perfluoropolyéther ou fluoropolyéther est de l'ordre de 1800 à 5000.

5. Graisses suivant l'une quelconque des revendications précédentes, caractérisées en ce qu'elles contiennent de 60 à 90% en poids de dérivés de perfluoropolyéther ou fluoropolyéther.